# EUROPÄISCHE PATENTSCHRIFT

(11) **EP 3 312 352 B1**
(45) Veröffentlichungstag und Bekanntmachung des Hinweises auf die Patenterteilung: **21.08.2019**
(21) Anmeldenummer: 17001456.7
(22) Anmeldetag: 30.08.2017
(51) Int. Cl.: E03C 1/086, E03C 1/10

(54) **EINSETZTEIL MIT EINEM WASSERFÜHRENDEN PATRONENGEHÄUSE**
INSERT WITH A WATER CONVEYING CARTRIDGE HOUSING
ÉLÉMENT RAPPORTÉ DOTÉ D'UN BOÎTIER DE CARTOUCHE ACHEMINANT DE L'EAU

(30) Priorität: 24.10.2016 DE 202016006536 U
(43) Veröffentlichungstag der Anmeldung: 25.04.2018
(73) Patentinhaber: Neoperl GmbH, 79379 Müllheim (DE)
(72) Erfinder: Hauth, Matthias, 79674 Todtnau/Muggenbrunn (DE)
(74) Vertreter: Börjes-Pestalozza, Henrich

(56) Entgegenhaltungen:
- WO-A2-01/54822
- DE-B3-102005 011 981
- DE-U1- 29 703 335

## Beschreibung

Die Erfindung betrifft ein Einsetzteil mit einem wasserführenden Patronengehäuse, das in eine Gehäuseaufnahme in einer Wasserleitung einsetzbar ist und das an dem Gehäuseaußenumfang des Patronengehäuses zumindest eine umlaufende Ringnut hat, in welcher Ringnut ein Dichtring angeordnet ist, der mit einem Teilbereich seines Ringquerschnitts über die Ringnut radial nach außen vorsteht, sowie mit zumindest einem, dem Einsetzteil zugeordneten Bauteil, das an seiner dem Einsetzteil zugewandten Stirnseite wenigstens einen Haltevorsprung hat, mittels welchem Haltevorsprung das Bauteil in einer verrasteten Stellung am Gehäuseaußenumfang des Patronengehäuses mit dem Einsetzteil zu einer Einheit verrastet ist.

Aus DE 297 03 335 U1 ist bereits ein sanitäres Einsetzteil der eingangs erwähnten Art vorbekannt, das als Rückflussverhinderer ausgebildet ist. Das vorbekannte Einsetzteil weist ein Patronengehäuse auf, das in eine Gehäuseaufnahme in einer sanitären Wasserleitung einsetzbar ist. An dem Gehäuseaußenumfang des Patronengehäuses ist zumindest eine umlaufende Ringnut vorgesehen, in welcher Ringnut ein Dichtring angeordnet ist, der mit einem Teilbereich seines Ringquerschnitts geringfügig über die Ringnut radial nach außen vorsteht, sodass der Dichtring den Ringspalt zwischen dem Innenumfang des die Gehäuseaufnahme bildenden Leitungsabschnitts und dem Gehäuseaußenumfang des Patronengehäuses abdichten kann. Das vorbekannte Einsetzteil trägt auf seiner zuströmseitigen Stirnseite ein hutförmiges Filtersieb, das an seinem dem Einsetzteil zugewandten Stirnrand wenigstens einen als Ringwandung ausgebildeten Haltevorsprung hat, mit dem das Filtersieb an einem am Einsetzteil stirnseitig vorstehenden und im Außendurchmesser reduzierten Gehäusevorsprung zu einer aus Einsetzteil und Filtersieb bestehenden Einheit verrastbar ist. Da die Rastmittel an dem Einsetzteil einerseits und am Filtersieb andererseits aneinander angepasst sind, ist das sanitäre Einsetzteil allein zur Verwendung in Verbindung mit dem Filtersieb bestimmt und zumindest das Filtersieb lässt sich nicht auch mit solchen Einsetzteilen verwenden, die ursprünglich für einen Einsatz ohne zuströmseitiges Filtersieb gedacht waren und die daher nicht über den erforderlichen stirnseitigen Gegenvorsprung verfügen.

Aus der EP 0 593 490 B1 kennt man bereits ein ebenfalls als Rückflussverhinderer ausgebildetes sanitäres Einsetzteil, bei welchem das Patronengehäuse des Einsetzteiles an seiner Zuströmseite mit einem hutförmigen Filtersieb einstückig verbunden ist. Eine Verwendung des Einsetzteiles auch ohne Filtersieb ist daher nicht möglich.

Die oben beschriebenen vorbekannten Einsetzteile sind mit ihrem Patronengehäuse in die, in einer sanitären Wasserleitung vorgesehene Gehäuseaufnahme einsetzbar. Insbesondere als Rückflussverhinderer ausgebildete Einsetzteile werden darüber hinaus aber auch für andere Anwendungsbereiche, beispielsweise in der Wasserleitung eines wasserverbrauchenden Gerätes, benötigt.

Um derartige Einsetzteile möglichst vielseitig verwenden zu können, kann es deshalb vorteilhaft sein, wenn das Einsetzteil wahlweise mit und ohne das beispielsweise als Filtersieb ausgebildete Bauteil verwendbar ist, und wenn das Einsetzteil bei Bedarf auch nachträglich noch mit einem derartigen Bauteil verbunden werden kann.

Es besteht daher die Aufgabe, ein Einsetzteil der eingangs erwähnten Art zu schaffen, dass wahlweise mit und ohne das eine weitere Funktion beinhaltende Bauteil verwendbar ist, wobei das Einsetzteil bei Bedarf auch nachträglich noch mit einem derartigen Bauteil verbindbar sein soll.

Die erfindungsgemäße Lösung dieser Aufgabe besteht bei dem Einsetzteil der eingangs erwähnten insbesondere darin, dass der wenigstens eine Haltevorsprung in der verrasteten Stellung in der zumindest einen, für den Dichtring bestimmten Ringnut verrastet ist.

Das erfindungsgemäße Einsetzteil weist ein wasserführendes Patronengehäuse auf, das in eine Gehäuseaufnahme einsetzbar ist, welche in einer Wasserleitung vorzugsweise zwischen zwei lösbar miteinander verbindbaren Leitungsabschnitten zwischengeschaltet ist. Dabei kann das erfindungsgemäße Einsetzteil beispielsweise in die, in einer sanitären Wasserleitung vorgesehene Gehäuseaufnahme oder in die Gehäuseaufnahme der in einem wasserverbrauchenden Gerät und insbesondere in einem Kaffeeautomaten befindlichen Wasserleitung eingesetzt werden. An dem Gehäuseaußenumfang des Patronengehäuses ist zumindest eine umlaufende Ringnut vorgesehen, in der ein Dichtring angeordnet ist, der mit einem Teilbereich seines Ringquerschnitts über die Ringnut derart radial nach außen vorsteht, dass dieser Dichtring den zwischen dem Gehäuseaußenumfang des Patronengehäuses und dem Leitungsinnenumfang im Bereich der Gehäuseaufnahme verbleibenden Ringspalt abdichten kann. Dem Einsetzteil ist ein Bauteil zugeordnet, das an seiner dem Einsetzteil zugewandten Stirnseite wenigstens einen Haltevorsprung hat, mittels dem das Bauteil in einer verrasteten Stellung am Gehäuseaußenumfang des Patronengehäuses mit dem Einsetzteil zu einer Einheit verrastet werden kann. Erfindungsgemäß ist dabei vorgesehen, dass der wenigstens eine Haltevorsprung in der verrasteten Stellung in der zumindest einen, für den Dichtring bestimmten Ringnut verrastet ist. Auf diese Weise kann wahlweise entweder die aus dem Einsetzteil sowie dem damit verrasteten Bauteil bestehende Einheit verwendet oder auch nur das Einsetzteil ohne das Bauteil eingesetzt werden, und auch das nachträgliche Verrasten des Bauteiles an einem solchen Einsetzteil ist bei Bedarf noch möglich.

Dabei sieht eine besonders einfache und vorteilhafte Ausführungsform gemäß der Erfindung vor, dass der wenigstens eine Haltevorsprung an seinem freien Randbereich mindestens einen Rastvorsprung trägt, der in der verrasteten Stellung in die Ringnut im Bereich zwischen dem Dichtring und einer benachbarten Nutflanke der Ringnut verrastend eingreift. Bei dieser besonders kompakten und platzsparenden Ausführung trägt der Haltevorsprung an seinem freien Randbereich mindestens einen Rastvorsprung, mit dem der Haltevorsprung an der dem Dichtring benachbarten Nutflanke der Ringnut verrastend angreifen kann.

Eine besonders einfache und dennoch besonders stabile Ausführungsform gemäß der Erfindung sieht vor, dass der Haltevorsprung als eine umlaufende Ringwandung ausgebildet ist, die in der verrasteten Stellung den zwischen der dem Bauteil zugewandten Stirnfläche des Patronengehäuses und der Ringnut vorgesehenen Gehäuseabschnitt des Patronengehäuses umschließt. Bei dieser Ausführungsform gemäß der Erfindung ist gleichzeitig vorgesehen, dass die am Gehäuseaußenumfang des Patronengehäuses vorgesehene Ringnut in dem einer der Stirnflächen des Patronengehäuses zugewandten Gehäuse-Teilbereich des Patronengehäuses und vorzugsweise in den an die zuströmseitige Stirnfläche des Patronengehäuses angrenzenden Teilbereich des Gehäuseaußenumfangs angeordnet ist.

Eine feste Rastverbindung zwischen dem erfindungsgemäßen Einsetzteil einerseits und dem ihm zugeordneten Bauteil andererseits wird begünstigt, wenn die als Haltevorsprung dienende Ringwandung an ihrem Wandungsinnenumfang wenigstens einen, vorzugsweise umlaufenden Rastvorsprung trägt.

Eine kompakte Bauweise der aus dem Einsetzteil sowie dem zugeordneten Bauteil bestehenden Einheit wird begünstigt, wenn der wenigstens eine Rastvorsprung in den zwischen dem im Querschnitt runden Dichtring und der benachbarten Nutflanke der Rastnut verbleibenden umlaufenden Freiraum oder Ringraum verrastend eingreift.

Um auch das nachträgliche Anbringen des eine weitere Funktion bietenden Bauteils an dem erfindungsgemäßen Einsetzteil zu erleichtern, ist es vorteilhaft, wenn der wenigstens eine Haltevorsprung eine Dicke hat, die derart bemessen ist, dass die Außenseite des wenigstens einen Haltevorsprungs in radialer Richtung hinter dem maximalen Außenumfang des Dichtrings zurückbleibt.

Eine funktionssichere und wartungsarme Ausführung des erfindungsgemäßen Einsetzteiles sieht vor, dass das ihm zugeordnete Bauteil als Filtersieb ausgebildet ist. Ein auf der Zuströmseite des Einsetzteils angeordnetes Filtersieb vermag solche, im zuströmenden Wasser mitgerissene Schmutzpartikel und Kalkreste auszufiltern, die andernfalls die ordnungsgemäße Funktion des Einsetzteiles beeinträchtigen könnten.

Das erfindungsgemäße Einsetzteil lässt sich bei Bedarf auch nachträglich noch mit dem eine zusätzliche Funktion bietenden Bauteil nachrüsten, ohne dass deshalb eine in ihrer Längserstreckung größere Gehäuseaufnahme gesucht und verwendet werden müsste, wenn das als Filtersieb ausgebildete Bauteil eine quer zur Durchströmrichtung orientierte und vorzugsweise plattenförmige Siebfläche hat.

Eine besonders vorteilhafte Verwendung des erfindungsgemäßen Einsetzteiles sieht vor, dass dieses Einsetzteil als Rückflussverhinderer ausgestaltet ist.

Bevorzugte Verwendungsbeispiele des erfindungsgemäßen Einsetzteiles sehen beispielsweise vor, dass das Einsetzteil mit seinem Patronengehäuse in die, in einer sanitären Wasserleitung vorgesehene Gehäuseaufnahme oder in die Gehäuseaufnahme der Wasserleitung eines wasserverbrauchenden Gerätes und insbesondere eines Kaffeeautomaten einsetzbar ist.

Weiterbildungen gemäß der Erfindung ergeben sich aus den Ansprüchen in Verbindung mit der Zeichnung sowie der Beschreibung. Nachstehend wird die Erfindung anhand eines bevorzugten Ausführungsbeispiels noch näher beschrieben.

Es zeigt:
- Fig. 1: ein in einem Längsschnitt dargestelltes Einsetzteil, das in der hier gezeigten verrasteten Stellung mit einem zuströmseitigen und hier als Filtersieb ausgebildeten Bauteil zu einer Einheit verrastet ist,
- Fig. 2: die aus dem Einsetzteil sowie dem zuströmseitig angeordneten Bauteil bestehende Einheit in einem Detail-Längsschnitt im Bereich der Rastverbindung zwischen diesen einander zugeordneten Bestandteilen der aus Einsetzteil und Filtersieb bestehenden Einheit, und
- Fig. 3: die aus dem Einsetzteil sowie dem Bauteil gemäß den Figuren 1 und 2 gezeigte Einheit in einer perspektivischen Draufsicht auf die Zuströmseite dieser Einheit.

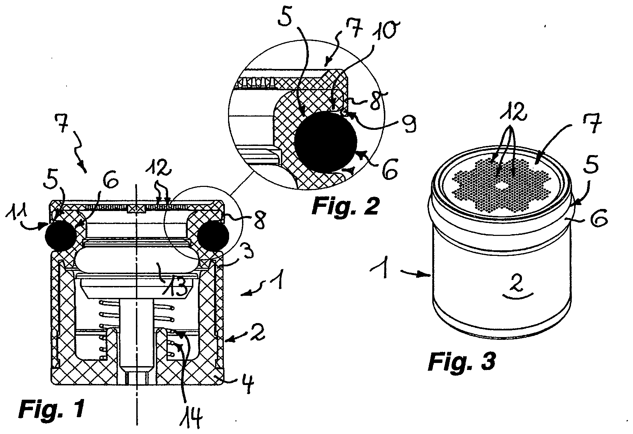

In den Figuren 1 bis 3 ist ein Einsetzteil 1 dargestellt, das hier als Rückflussverhinderer ausgebildet ist. Das Einsetzteil 1 weist ein Patronengehäuse 2 auf, das hier aus einem zuströmseitigen Gehäuseteil 3 und einem damit ineinander geschobenen abströmseitigen Gehäuseteil 4 besteht. Das hier zweiteilig ausgebildete Patronengehäuse 2 ist in eine Gehäuseaufnahme einsetzbar, die zwischen zwei Leitungsabschnitten einer hier nicht weiter dargestellten Wasserleitung zwischengeschaltet ist. Dabei sehen bevorzugte Anwendungsbeispiele vor, dass das Einsetzteil 1 in die, in einer sanitären Wasserleitung befindliche Gehäuseaufnahme oder in die Gehäuseaufnahme der Wasserleitung eines wasserverbrauchenden Gerätes, beispielsweise eines Kaffeeautomaten, einsetzbar ist. An dem Gehäuseaußenumfang des Patronengehäuses 2 ist eine umlaufende Ringnut 5 vorgesehen, in welcher Ringnut 5 ein Dichtring 6 angeordnet ist, der mit einem Teilbereich seines hier runden Ringquerschnitts über die Ringnut 5 radial nach außen vorsteht.

Dem Einsetzteil 1 ist ein Bauteil 7 zugeordnet, das eine weitere Funktion bietet. Das Bauteil 7 ist hier als Filtersieb ausgebildet, welches die im zuströmenden Wasserstrom mitgerissenen Schmutzpartikel oder Kalkablagerungen auszufiltern hat, bevor diese die Funktion des Einsetzteiles 1 beeinträchtigen können. Aus dem Detail-Längsschnitt in Figur 2 wird deutlich, dass der Haltevorsprung 5 in der hier gezeigten verrasteten Stellung in der für den Dichtring 6 bestimmten Ringnut 5 verrastet ist. Auf diese Weise kann wahlweise entweder die aus dem Einsetzteil 1 sowie dem damit verrasteten Bauteil 7 bestehende Einheit verwendet oder auch nur das Einsetzteil 1 ohne das Bauteil 7 eingesetzt werden und auch das nachträgliche Verrasten des Bauteiles 7 an einem solchen Einsetzteil 1 ist bei Bedarf noch möglich.

In den Längsschnitten gemäß den Figuren 1 und 2 ist erkennbar, dass der Haltevorsprung 8 als eine umlaufende Ringwandung ausgebildet ist, die in der verrasteten Stellung den zwischen der dem Bauteil 7 zugewandten Stirnfläche des Patronengehäuses 2 und der Ringnut 5 vorgesehenen Gehäuseabschnitt des Patronengehäuses 2 umschließt.

Dabei trägt der umlaufende Haltevorsprung 8 an seinem freien Randbereich mindestens einen Rastvorsprung 9, der in der verrasteten Stellung in die Ringnut 5 im Bereich zwischen dem Dichtring 6 und einer benachbarten Nutflanke 10 der Ringnut 5 verrastend eingreift. Dabei greift der Rastvorsprung 9 an dem außenumfangsseitigen Nutrand der Nutflanke 10 der Ringnut 5 verrastend an.

Der an den Haltevorsprung 8 innenumfangseitig angeformte umlaufende Rastvorsprung 9 greift in den umlaufenden Freiraum oder Ringraum 11 verrastend ein, welcher zwischen dem im Querschnitt runden Dichtring 6 und der benachbarten Nutflanke 10 der Ringnut 5 verbleibt.

Aus einem Vergleich der Figuren 1 und 2 wird deutlich, dass der Haltevorsprung 8 eine Dicke hat, die derart bemessen ist, dass die Außenseite des wenigstens einen Haltevorsprungs 8 in radialer Richtung hinter dem maximalen Außenumfang des Dichtrings 6 zurückbleibt. Auf diese Weise kann das hier dargestellte Einsetzteil 1 in derselben Gehäuseaufnahme der Wasserleitung eingesetzt werden, unabhängig davon, ob das Einsetzteil 1 mit dem Bauteil 7 verrastet ist oder nicht.

Das Bauteil 7 ist hier als Filtersieb ausgebildet. In Figur 3 sind die kleinen Filteröffnungen 12 im Filtersieb zu erkennen. Dabei weist das als Filtersieb ausgebildete Bauteil 7 eine quer zur Durchströmrichtung orientierte und hier plattenförmig ausgebildete Siebfläche auf.

Im Gehäuseinnenraum des als Rückflussverhinderer ausgestalteten Einsetzteiles 1 ist ein Ventilkörper 13 verschieblich geführt, der von der in Figur 1 gezeigten Schließstellung unter dem Druck des anströmenden Wasser gegen die Rückstellkraft einer Rückstellfeder 14 in eine Offenposition verschiebbar ist.

### Bezugszeichenliste

- 1: Einsetzteil
- 2: Patronengehäuse
- 3: zuströmseitiges Gehäuseteil
- 4: abströmseitiges Gehäuseteil
- 5: Ringnut
- 6: Dichtring
- 7: Bauteil
- 8: Haltevorsprung
- 9: Rastvorsprung
- 10: Nutflanke
- 11: Ringraum
- 12: Filter- oder Sieböffnungen
- 13: Ventilkörper
- 14: Rückstellfeder

## Patentansprüche

1. Einsetzteil (1) mit einem wasserführenden Patronengehäuse (2), das in eine Gehäuseaufnahme in einer Wasserleitung einsetzbar ist, und das an dem Gehäuseaußenumfang des Patronengehäuses (2) zumindest eine umlaufende Ringnut (5) hat, in welcher Ringnut (5) ein Dichtring (6) angeordnet ist, der mit einem Teilbereich seines Ringquerschnitts über die Ringnut (5) radial nach außen vorsteht, sowie mit zumindest einem, dem Einsetzteil (1) zugeordneten Bauteil (7), das an seiner dem Einsetzteil (1) zugewandten Stirnseite wenigstens einen Haltevorsprung (8) hat, mittels welchem Haltevorsprung (8) das Bauteil (7) in einer verrasteten Stellung am Gehäuseaußenumfang des Patronengehäuses (2) mit dem Einsetzteil (1) zu einer Einheit verrastet ist, **dadurch gekennzeichnet, dass** der wenigstens eine Haltevorsprung (8) in der verrasteten Stellung in der zumindest einen, für den Dichtring (6) bestimmten Ringnut (5) verrastet ist.

2. Einsetzteil nach Anspruch 1, **dadurch gekennzeichnet, dass** der wenigstens eine Haltevorsprung (8) an seinem freien Randbereich mindestens einen Rastvorsprung (9) trägt, der in der verrasteten Stellung in die Ringnut (5) im Bereich zwischen dem Dichtring (6) und einer benachbarten Nutflanke (10) der Ringnut (5) verrastend eingreift.

3. Einsetzteil nach Anspruch 1 oder 2, **dadurch gekennzeichnet, dass** der Haltevorsprung (8) als eine umlaufende Ringwandung ausgebildet ist, die in der verrasteten Stellung den zwischen der dem Bauteil (7) zugewandten Stirnfläche des Patronengehäuses (2) und der Ringnut (5) vorgesehenen Gehäuseabschnitt des Patronengehäuses (2) umschließt.

4. Einsetzteil nach Anspruch 3, **dadurch gekennzeichnet, dass** die als Haltevorsprung (8) dienende Ringwandung an ihrem Wandungsinnenumfang wenigstens einen, vorzugsweise umlaufenden Rastvorsprung (9) trägt.

5. Einsetzteil nach Anspruch 4, wobei Anspruch 3 vom Anspruch 2 abhängig ist, **dadurch gekennzeichnet, dass** der wenigstens eine Rastvorsprung (9) in den zwischen dem im Querschnitt runden Dichtring (6) und der benachbarten Nutflanke (10) der Ringnut (5) verbleibenden umlaufenden Freiraum oder Ringraum (11) verrastend eingreift.

6. Einsetzteil nach einem der Ansprüche 1 bis 5, **dadurch gekennzeichnet, dass** der wenigstens eine Haltevorsprung (8) eine Dicke hat, die derart bemessen ist, dass die Außenseite des wenigstens einen Haltevorsprungs (8) in radialer Richtung hinter dem maximalen Außenumfang des Dichtrings (6) zurückbleibt.

7. Einsetzteil nach einem der Ansprüche 1 bis 6, **dadurch gekennzeichnet, dass** das Bauteil (7) als Filtersieb ausgebildet ist.

8. Einsetzteil nach Anspruch 7, **dadurch gekennzeichnet, dass** das als Filtersieb ausgebildete Bauteil (7) eine quer zur Durchströmrichtung orientierte und vorzugsweise plattenförmige Siebfläche hat.

9. Einsetzteil nach einem der Ansprüche 1 bis 8, **dadurch gekennzeichnet, dass** das Einsetzteil (1) als Rückflussverhinderer ausgestaltet ist.

10. Einsetzteil nach einem der Ansprüche 1 bis 9, **dadurch gekennzeichnet, dass** das Einsetzteil (1) mit seinem Patronengehäuse (2) in die, in einer sanitären Wasserleitung vorgesehene Gehäuseaufnahme oder in die, in der Wasserleitung eines wasserverbrauchenden Gerätes und insbesondere eines Kaffeeautomaten angeordnete Gehäuseaufnahme einsetzbar ist.

## Claims

1. Insert part (1) having a water-channelling cartridge housing (2), which can be inserted into a housing holder in a water line and which, on the outer circumference of the cartridge housing (2), has at least one encircling annular groove (5), in which annular groove (5) is arranged a sealing ring (6), which has a sub-region of its ring cross section projecting radially outwards beyond the annular groove (5), and having at least one component (7), which is assigned to the insert part (1) and, on its end side which is directed towards the insert part (1), has at least one retaining protrusion (8), by means of which retaining protrusion (8) the component (7), in a latched position on the outer circumference of the cartridge housing (2), is latched to the insert part (1) to form a unit, **characterized in that** the at least one retaining protrusion (8), in the latched position, is latched in the at least one annular groove (5) intended for the sealing ring (6).

2. Insert part according to Claim 1, **characterized in that** the at least one retaining protrusion (8), on its free peripheral region, bears at least one latching protrusion (9), which, in the latched position, engages with latching action in the annular groove (5) in the region between the sealing ring (6) and an adjacent flank (10) of the annular groove (5).

3. Insert part according to Claim 1 or 2, **characterized in that** the retaining protrusion (8) is designed in the form of an encircling annular wall which, in the latched position, encloses that portion of the cartridge housing (2) which is provided between the annular groove (5) and that end surface of the cartridge housing (2) which is directed towards the component (7).

4. Insert part according to Claim 3, **characterized in that** the annular wall serving as the retaining protrusion (8) bears at least one, preferably encircling, latching protrusion (9) on its inner circumference.

5. Insert part according to Claim 4, wherein Claim 3 is dependent on Claim 2, **characterized in that** the at least one latching protrusion (9) engages with latching action in the encircling free space or annular space (11) which remains between the cross-sectionally round sealing ring (6) and the adjacent flank (10) of the annular groove (5).

6. Insert part according to one of Claims 1 to 5, **characterized in that** the at least one retaining protrusion (8) has a thickness which is dimensioned such that the outer side of the at least one retaining protrusion (8) remains behind the maximum outer circumference of the sealing ring (6), as seen in the radial direction.

7. Insert part according to one of Claims 1 to 6, **characterized in that** the component (7) is designed in the form of a filter screen.

8. Insert part according to Claim 7, **characterized in that** the component (7) designed in the form of a filter screen has a preferably plate-like screen surface which is oriented transversely to the throughflow direction.

9. Insert part according to one of Claims 1 to 8, **characterized in that** the insert part (1) is configured in the form of a backflow preventer.

10. Insert part according to one of Claims 1 to 9, **characterized in that** the insert part (1) can be inserted, by way of its cartridge housing (2), into the housing holder provided in a sanitary water line or into the housing holder arranged in the water line of a water-consuming appliance and in particular of a coffee machine.

## Revendications

1. Élément rapporté (1) doté d'un boîtier de cartouche (2) acheminant de l'eau, qui peut être inséré dans un logement de boîtier dans une conduite d'eau, et qui comporte à la périphérie extérieure de boîtier du boîtier de cartouche (2) au moins une rainure annulaire périphérique (5), rainure annulaire (5) dans laquelle est disposé un anneau d'étanchéité (6), qui est saillant radialement vers l'extérieur au-delà de la rainure annulaire (5) avec une région partielle de sa section transversale d'anneau, ainsi qu'avec au moins un composant (7) associé à l'élément rapporté (1), qui possède sur son côté frontal tourné vers l'élément rapporté (1) au moins une saillie de retenue (8), saillie de retenue (8) au moyen de laquelle le composant (7) est encliqueté en une unité avec l'élément rapporté (1) dans une position encliquetée à la périphérie extérieure de boîtier du boîtier de cartouche (2), **caractérisé en ce que** ladite au moins une saillie de retenue (8) dans la position encliquetée est encliquetée dans ladite au moins une rainure annulaire (5) destinée à l'anneau d'étanchéité (6).

2. Élément rapporté selon la revendication 1, **caractérisé en ce que** ladite au moins une saillie de retenue (8) porte sur sa région de bord libre au moins une saillie d'encliquetage (9), qui dans la position encliquetée s'engage par encliquetage dans la rainure annulaire (5) dans la région entre l'anneau d'étanchéité (6) et un flanc de rainure voisin (10) de la rainure annulaire (5).

3. Élément rapporté selon une revendication 1 ou 2, **caractérisé en ce que** la saillie de retenue (8) est formée par une paroi annulaire périphérique, qui dans la position encliquetée entoure la partie de boîtier du boîtier de cartouche (2) prévue entre la face frontale du boîtier de cartouche (2) tournée vers le composant (7) et la rainure annulaire (5).

4. Élément rapporté selon la revendication 3, **caractérisé en ce que** la paroi annulaire servant de saillie de retenue (8) porte sur sa périphérie intérieure de paroi au moins une saillie d'encliquetage (9), de préférence périphérique.

5. Élément rapporté selon la revendication 4, dans lequel la revendication 3 dépend de la revendication 2, **caractérisé en ce que** ladite au moins une saillie d'encliquetage (9) s'engage par encliquetage dans l'espace libre ou l'espace annulaire (11) restant entre l'anneau d'étanchéité (6) de section transversale ronde et le flanc de rainure voisin (10) de la rainure annulaire (5).

6. Élément rapporté selon l'une quelconque des revendications 1 à 5, **caractérisé en ce que** ladite au moins une saillie de retenue (8) a une épaisseur, qui est dimensionnée de telle manière que le côté extérieur de ladite au moins une saillie de retenue (8) reste en direction radiale en retrait derrière la périphérie extérieure maximale de l'anneau d'étanchéité (6).

7. Élément rapporté selon l'une quelconque des revendications 1 à 6, **caractérisé en ce que** le composant (7) est formé par un tamis de filtre.

8. Élément rapporté selon la revendication 7, **caractérisé en ce que** le composant (7) formé par un tamis de filtre a une face de filtrage orientée transversalement à la direction d'écoulement et est de préférence en forme de plaque.

9. Élément rapporté selon l'une quelconque des revendications 1 à 8, **caractérisé en ce que** l'élément rapporté (1) est formé par un dispositif anti-retour.

10. Élément rapporté selon l'une quelconque des revendications 1 à 9, **caractérisé en ce que** l'élément rapporté (1) peut être inséré avec son boîtier de cartouche (2) dans le logement de boîtier prévu dans une conduite d'eau sanitaire ou dans le logement de boîtier disposé dans la conduite d'eau d'un appareil consommant de l'eau et en particulier d'une machine à café.
